# EUROPÄISCHE PATENTSCHRIFT

(11) **EP 2 465 626 B1**
(45) Veröffentlichungstag und Bekanntmachung des Hinweises auf die Patenterteilung: **10.08.2016**
(21) Anmeldenummer: 11193526.8
(22) Anmeldetag: 14.12.2011
(51) Int. Cl.: B23B 31/14, B23B 31/16

(54) **Spannbacke zum Einspannen von Werkstücken**
Chuck jaw for tensioning workpieces
Mâchoire de serrage destinée au serrage de pièces usinées

(30) Priorität: 14.12.2010 DE 102010061224
(43) Veröffentlichungstag der Anmeldung: 20.06.2012
(73) Patentinhaber: Atil, Hasan Bahri, 87435 Kempten (DE)
(72) Erfinder: Atil, Hasan Bahri, 87435 Kempten (DE); Atil, Ahmet, 87488 Betzigau (DE)
(74) Vertreter: Winter, Brandl, Fürniss, Hübner, Röss, Kaiser, Polte - Partnerschaft mbB

(56) Entgegenhaltungen:
- EP-A1- 0 444 380
- DE-A1- 10 338 275
- DE-B4- 19 934 375
- US-A- 2 207 621
- US-A- 3 912 287

## Beschreibung

Die Erfindung betrifft eine Spannbacke zum Einspannen von Werkstücken, insbesondere Werkstücken mit zumindest teilweise sphärischer Umfangsoberfläche, an Werkzeugmaschinen, insbesondere Drehbänken gemäß dem Oberbegriff des Patentsanpruchs 1.

Spannbacken der in der Frage stehenden Art sind beispielsweise an Spannfuttern angeordnet, welche ein zu bearbeitendes Werkstück aufnehmen. Ein allgemein bekanntes Beispiel eines derartigen Spannfutters mit Spannbacken ist ein Drehfutter an Drehbänken.

Hierbei sind an dem Spannfutter in Umfangsrichtung gleichmäßig zueinander beabstandete Spannbacken vorgesehen, die jeweils einen Backenkörper aufweisen, der für einen Einspannvorgang in Richtung auf das Werkstück zustellbar und für einen Ausspannvorgang von diesem wegfahrbar ist. Am Backenkörper befindet sich ein Einspannkörper, der in Anlage mit einem Abschnitt der Umfangsoberfläche des Werkstücks bringbar bzw. von diesem Abschnitt abhebbar ist. Die einzelnen Backenkörper werden hierbei in der Regel von einem zentralen Antrieb für meist symmetrisch zur Längsmittelachse des Spannfutters verlaufende Bewegungen zwangsgesteuert.

Die in der Praxis wohl am häufigsten anzutreffende Ausgestaltungsform eines derartigen Spannfutters ist ein Dreibackenfutter, bei dem drei Backenkörper in Umfangsrichtung des Spannfutters jeweils im Abstand von 120 Grad angeordnet sind. Weitere bekannte Bauformen sind Vier- oder Sechsbackenfutter, bei denen dann die einzelnen Backenkörper umfangsseitig im Abstand von 90 Grad bzw. 60 Grad angeordnet sind.

Sämtlichen Spannfutterbauformen ist gemeinsam, dass zwischen den Einspannkörpern der jeweiligen Backenkörper ein Werkstück mit einer gewissen Haltekraft einspannbar und in Rotation versetzbar ist, um in einem Span abhebenden Bearbeitungsvorgang bearbeitet zu werden.

Die Verwendung derartiger Spannfutter mit Backenkörpern, deren Einspannkörper radial von außen gegen das zu bearbeitende Werkstück drücken, ist insbesondere dann unproblematisch, wenn das Werkstück hinreichend stabil, beispielsweise ein massiver Vollkörper ist, der die über die Einspannkörper aufgebrachten Einspann- bzw. Hältekräfte problemlos aufnehmen kann.

Anders stellt sich der Sachverhalt dar, wenn das zu bearbeitende Werkstück empfindlich im Sinne einer möglichen Verformungsgefahr durch die aufgebrachten Haltekräfte ist. Um dieser Problematik zu begegnen, sind Spannbacken-Sonderbauformen entwickelt worden, insbesondere sogenannte Pendelbacken. Pendelbacken bestehen in der Regel aus einer beweglichen Pendelbrücke mit zwei Einspannkörpern, wobei die Pendelbrücke mit Hilfe eines Lagerbolzens auf dem Backenkörper montiert ist (vergl. z. B. DE 199 34 375 B4). Da der Backenkörper wie bei einer herkömmlichen Spannbacke, also einer einteiligen Spannbacke, am Spannfutter befestigt werden kann, sind Pendelbacken einfach und schnell nachzurüsten. Mit Hilfe von Pendelbacken können konventionelle Dreibackenfutter innerhalb sehr kurzer Zeit und insbesondere kostengünstig auf eine Sechspunktspannung umgerüstet werden, bei der gleichmäßig im Winkel von jeweils 60 Grad am Werkstückaußenumfang oder auch an einem Innendurchmesser verteilte Einspannpunkte die Spannkräfte anstelle von drei auf sechs Punkte übertragen. Werkstückverformüngen lassen sich hierdurch wesentlich verringern und insofern sind Pendelbacken für verformungsempfindliche, beispielsweise dünnwandige Bauteile besonders gut geeignet. Da die die beiden Einspannteile tragende Pendelbrücke pendelt, also beweglich am Backenkörper gelagert ist, erfolgt darüber hinaus innerhalb eines gewissen Bereichs auch eine Anpassung an nicht vollständig runde Werkstücke, beispielsweise Gusskörper.

Der Gedanke eines Spannfutters mit Pendelbacken lässt sich - unter Berücksichtigung der werkzeugmaschinenseitigen Grenzen - ausreizen insofern, als auch Zwölfpunkt- oder Vierundzwanzigpunktlagerungen realisiert werden können, also eine entsprechende Anzahl von Pendelbacken am Spannfutter vorgesehen wird, wobei dann beispielsweise bei einer Vierundzwanzigpunktspannung die Spannkräfte umfangsseitig in Schritten von 15 Grad auf das Werkstück aufgebracht werden, so dass besonders empfindliche Werkstücke immer noch mit hinreichend hohen Haltekräften gelagert werden können.

Allerdings sind bei Pendelbacken die beiden Einspannkörper an der Pendelbrücke in einem festgelegten Abstand zueinander (symmetrisch zu der durch den Lagerbolzen definierten Schwenk- oder Pendelachse der Brücke) festgelegt. Je nach Spannweite der Pendelbrücke sind somit die beiden Einspannkörper in einem unterschiedlichen, jedoch jeweils festgelegten Abstand zueinander angeordnet. Dies bedeutet, dass mit einem Satz von Pendelbacken nur Werkstücke innerhalb eines relativ beschränkten Durchmesserbereichs eingespannt werden können. Von einem bestimmten Durchmesserbereich nach oben oder unten abweichende Durchmesser eines Werkstücks bedingen einen anderen Satz von Pendelbrücken mit einem entsprechend größeren oder kleineren Abstand der Einspannkörper voneinander.

In der Praxis kann dies in nachteiliger Weise ein häufigeres Umrüsten der Werkzeugmaschine bedeuten.

Weitestgehend unabhängig von den oben geschilderten Umständen ist darüber hinaus der Sachverhalt zu sehen, dass bei der Verwendung von gehärteten Backen die Problematik eines für Präzisionsbearbeitungen unzureichenden Rundlaufs besteht. Es ist bekannt, Spannbacken vor einer Präzisionsbearbeitung auszudrehen. Der Hintergrund hierfür ist, dass Spannbacken (Aufsatzbacken) für das Einspannen von Drehrohlingen, bei denen eine hohe Einmittgenauigkeit (noch) nicht benötigt wird, durchaus ausreichend sind. Für eine genaue Einspannung bereits bearbeiteter Werkstücke sind sie jedoch nicht ohne weiteres verwendbar, da die toleranzbedingten Abmessungsunterschiede aller an der Lagerung und dem Antrieb der einzelnen Backen beteiligten Einzelteile durch ihre Summierung zu letztendlich unterschiedlichen radialen Stellungen der Spannbacken führen. Da diese Unterschiede größer als nach der DIN vorgeschriebene Rundlaufabweichungen sind, kann diesem Problem nur durch entsprechende Nachbearbeitungen der Spannbacken vor deren Einsatz begegnet werden. Hierzu ist es bekannt, die Spannbacken zur Erreichung der geforderten hohen Rundlaufgenauigkeit und Wiederholgenauigkeit auf dem Drehfutter auszuschleifen oder auszudrehen. Insbesondere bei gehärteten Spannbacken ist hierbei das Ausdrehen aus fertigungstechnischen Gründen nicht möglich, so dass zu der Maßnahme des Ausschleifens gegriffen werden muss. Dies ist mit hohem Zeit- und damit Kostenaufwand verbunden.

Man greift daher bei der Präzisionsbearbeitung im Hundertstelmillimeter-Bereich oftmals auf Weichbacken zurück, welche aus einem nicht gehärteten Material gefertigt sind und sich auf- oder ausdrehen lassen. Derartige Weichbacken haben darüber hinaus den Vorteil, dass sie auf der bereits vorbearbeiteten Werkstückoberfläche, welche nach- oder endbearbeitet werden soll, beim Einspannvorgang keine Eindrückmarken hinterlassen, wie dies Hartbacken tun können.

Nach dem erfolgten Auf- oder Ausdrehen steht dann zwar ein Backensatz zur Verfügung, der die geforderte hohe Rundlaufgenauigkeit und Wiederholgenauigkeit auf dem Drehfutter bieten kann, jedoch ist dieser Backensatz im Wesentlichen auf einen festen Werkstückdurchmesser begrenzt, das heißt, hiervon nach oben oder unten abweichende Werkstückdurchmesser bedingen einen entsprechend angepassten Backensatz, der wiederum vor seinem Ersteinsatz in bekannter Weise ausgedreht werden muss. Die Herstellung entsprechender Backensätze, deren Bevorratung und insbesondere die Umrüstung von Werkzeugmaschinen (Drehbänken) von einem Backensatz für einen Werkstückdurchmesser auf einen anderen Backensatz für einen anderen Werkstückdurchmesser ist material-, zeit- und kostenintensiv.

Die vorliegende Erfindung hat es sich zur Aufgabe gemacht, eine Spannbacke der in Frage stehenden Art so auszugestalten, dass mit dieser Spannbacke unter Beibehaltung des Grundprinzips einer Pendelbacke ein größerer Durchmesser- bzw. Umfangsbereich eines einzuspannenden Werkstücks abgedeckt werden kann, wobei in diesem Durchmesser- bzw. Umfangsbereich des einzuspannenden Werkstücks das

Werkstück stets sicher, reproduzierbar und mit der erforderlichen Rundlaufgenauigkeit eingespannt werden kann.

Diese Aufgabe wird erfindungsgemäß durch die Merkmale des Hauptanspruchs 1 gelöst.

Weiterhin schlägt die vorliegende Erfindung vor, dass zunächst das Einspannteil an seiner dem Werkstück zugewandten Endseite zwei beidseitig einer Längsmittelachse des Einspannteils liegende Einspannkörper aufweist, welche jeweils entlang einer senkrecht zur Einspannteillängsmittelachse verlaufenden Kontaktlinie in Anlage mit dem Abschnitt der Umfangsoberfläche des Werkstücks bringbar sind, wobei die beiden Linien im Wesentlichen parallel zueinander verlaufen. Diese Anordnung von zwei Einspannkörpern oder Spanneinsätzen an einem Einspannteil entspricht insofern noch der Bauweise einer bekannten Pendelbacke, bei der das "Einspannteil" die Pendelbrücke ist. Erfindungsgemäß bewegen sich weiterhin die Kontaktlinien der Einspannkörper nach erfolgter Anlage an der Einspannoberfläche des Werkstücks bei einer weiteren unter Kraft erfolgenden Zustellbewegung der Einspannkörper in Richtung der Einspannoberfläche reversibel relativ zueinander und damit bezüglich der Einspannteillängsmittelachse und im Bereich zwischen den beiden Einspannkörpern ist ein Anlageteil vorhanden, welches mit einer mindestens eine weitere Kontaktlinie definierenden Anlagefläche in Richtung der Einspannoberfläche weist.

Bei der Spannbacke gemäß der vorliegenden Erfindung ist demnach durch die Anordnung der Einspannkörper an den freien Enden schwenkbeweglich gelagerter Hebel der (symmetrische) Abstand der Einspannkörper und damit der Kontaktlinien zur Einspannteillängsmittelachse nicht mehr festgelegt, also etwa durch die Spannweite der Pendelbrücke definiert, sondern die am Einspannteil schwenkbeweglich gelagerten Hebel erlauben eine Bewegung der Einspannkörper und damit der Kontaktlinien in einem weitaus größeren Bereich. Das heißt, es kann eine Anpassung an einen größeren Durchmesser- bzw. Umfangsbereich des jeweiligen Werkstücks erfolgen. Die zum sicheren Einspannen des Werkstücks notwendigen Spannkräfte oder-drücke werden hierbei nach wie vor gleichmäßig um den Außenumfang des zu bearbeitenden Werkstücks verteilt aufgebracht, so dass ein sicherer Halt des Werkstücks gewährleistet ist. Bei einer mit der erfindungsgemäßen Spannbacke ausgerüsteten Werkzeugmaschine kann aufgrund der erfindungsgemäßen Anordnung und Lagerung der Einspannkörper ein vergleichsweise großer Durchmesserbereich zu bearbeitender Werkstücke abg deckt werden, ohne dass zwischen unterschiedlichen Spannbackensätzen umgerüstet werden müsste. Weiterhin entfällt das bisher notwendige Auf- oder Ausdrehen von Spannbacken vor einer Werkstück-Präzisionsbearbeitung. Das aufwendige Lagern quasi maßgeschneiderter Spannbackensätze für unterschiedliche Einsatzzwecke (unterschiedliche Werkstückdurchmesser) entfällt ebenfalls.

Durch den Gegenstand der vorliegenden Erfindung ist somit eine weitaus schnellere, rationellere und kostensparende Fertigung unter Einbringung einer geringeren Anzahl von Mannstunden möglich.

Bevorzugt ist beim Gegenstand der vorliegenden Erfindung der Vorstehbetrag des Anlageteils von einer Stirnfläche des Einspannteils verschiebbar und/oder einstellbar. Durch diese Maßnahme wird in Kooperation mit den beiden Einspannkörpern eine Dreipunktanlage einer Spannbacke am Werkstückaußenumfang realisierbar, was unter bestmöglicher Schonung der Werkstückoberfläche große Einspann- und damit Haltekräfte gestattet.

Bevorzugt ist jeder der Einspannkörper an einem freien Ende eines am Einspannteil schwenkbeweglich gelagerten Hebels angeordnet, wobei die Hebel symmetrisch bezüglich der Einspannteillängsmittelachse am Einspannteil gelagert sind, wobei weiterhin die Einspannkörper mittels eines flexiblen, an den Außenumfang des Werkstücks zumindest abschnittsweise anpassbaren Verbindungselements miteinander verbunden sind. Durch das Verbindungselement ist zwischen den Einspannkörpern eine Zwangsführung der beiden Einspannkörper zueinander insofern gegeben, als diese nicht ungeführt beweglich sind, wie dies bei einer frei pendelnden Lagerung der beiden Hebel der Fall wäre, sondern das Verbindungselement legt sich im Zuge der Zustellbewegung des Backenkörpers an das Werkstück zumindest abschnittsweise an den Außenumfang des Werkstücks an und bewirkt hierdurch eine Zwangsbewegung der beiden Einspannkörper symmetrisch zu der Einspannteillängsmittelachse, also zu einem symmetrischen Aufsetzen der Kontaktlinien an der Umfangsoberfläche des Werkstücks (symmetrisch bezüglich der Einspannteillängsmittelachse).

Der Einspannkörper ist bevorzugt einstückig an dem einen freien Ende des zugehörigen Hebels ausgebildet, da dies fertigungstechnisch am einfachsten und damit kostengünstigsten ist. Für besondere Anwendungsfälle kann aber auch der Einspannkörper als ein vom Hebel separates Bauteil ausgeführt werden, beispielsweise dann, wenn unterschiedlichen Materialpaarungen Einspannkörper/Hebel notwendig sind. Zwischen dem Einspannkörper und dem Hebel sind dann entsprechende Befestigungs- und Haltemittel vorzusehen.

Der Einspannkörper hat weiterhin bevorzugt eine zylindermantelförmige, d.h. in Draufsicht kreisbogensegmentförmige Außenkontur, wobei die in Anlage mit dem Abschnitt des Werkstückaußenumfangs bringbare Kontaktlinie auf dieser Außenkontur liegt. Eine definierte Ausbildung der Kontaktlinie über einen großen Durchmesserbereich des zu bearbeitenden Werkstücks hinweg ist hierdurch gewährleistet. Alternativ hierzu und mit den im wesentlichen gleichen Vorteilen kann der Einspannkörper eine der Einspannoberfläche zugewandte, plane Außenkontur haben, wobei die in Anlage mit dem Abschnitt der Einspannoberfläche bringbare Kontaktlinie auf dieser Außenkontur liegt.

Bevorzugt weist das dem Einspannkörper abgewandte Ende des Hebels einen zur Einspannteillängsmittelachse weisenden Vorsprung auf. Durch eine Anlage der beiden Vorsprünge, welche symmetrisch beidseits der Einspannteillängsmittelachse ausgebildet sind, kann der maximale Abstand der an den anderen Enden der Hebel liegenden Einspannkörper definiert oder eingestellt werden.

Der Schwenkpunkt eines jeden Hebels liegt bevorzugt im Nahbereich des Einspannkörpers, also näher am Einspannkörper als an dem Vorsprung am anderen Ende des Hebels. Die Bewegung der beiden Einspannkörper aufeinander zu und voneinander weg ist hierdurch untersetzt und damit entsprechend fein.

Das Verbindungselement ist bevorzugt bandförmig und verläuft zumindest teilweise um die Außenkonturen der Einspannkörper. Durch die bandförmige Ausgestaltung des Verbindungselements ist dieses hinreichend stabil, kann sich flächig an den Außenumfang des Werkstücks anlegen und damit die beiden Einspannkörper zuverlässig zwangsbewegen oder -steuern. Besonders bevorzugt ist das Verbindungselement ein Federblechstreifen, der in seiner entspannten Lage ist, wenn sich die Vorsprünge an den den Einspannkörpern abgewandten Enden der Hebel berühren. In einer von dem Werkstückaußenumfang abgehobenen Position der Spannbacke werden somit die beiden Einspannkörper durch die Elastizität des Federblechstreifens in einer maximal voneinander beabstandeten Stellung gehalten, in der sich die Vorsprünge an den den Einspannkörpern abgewandten Enden der Hebel berühren, was einer Null- oder Ausgangsposition der Hebel und damit der gesamten Spannbacke entspricht. Da erfindungsgemäß das Verbindungselement im Zuge der Zustellbewegung des Backenkörpers an das Werkstück sich zumindest abschnittsweise an den Außenumfang des Werkstücks anlegt (anpasst), erfolgt eine vom Durchmesser des Werkstücks abhängende Durchfederung des Federblechstreifens, was mit einer entsprechenden Zustellbewegung der Einspannkörper auf den Außenumfang des Werkstücks einhergeht, so dass eine selbsttätige Anpassung der Einspannkörper und damit der Spannbacke an den Werkstückaußenumfang erfolgt.

Bevorzugt befindet sich im Bereich des Einspannteils ein Fliehgewicht, welches sich mit zunehmender Drehzahl des Spannfutters in Richtung des Backenkörpers bewegt und sich im Zuge dieser Bewegung zwischen die den Einspannteilen abgewandten Enden der Hebel bzw. die dortigen Vorsprünge drängt. Hierdurch werden diese Vorsprünge von der Einspannteillängsmittelachse weg bewegt, so dass sich die Einspannkörper symmetrisch aufeinander bzw. auf die Einspannteillängsmittelachse zu bewegen. Durch diese konstruktive Maßnahme wird erreicht, dass bei konstantem Abstand des Backenkörpers zum Werkstück mit zunehmender Drehzahl die Einspannkörper mit zunehmender Kraft gegen den Außenumfang des Werkstücks gedrückt werden, um den mit steigender Drehzahl zunehmenden Fliehkräften entsprechend entgegen wirken zu können.

Bevorzugt weist hierbei der sich zwischen die Enden der Hebel drängende Abschnitt des Fliehgewichts ein Verdrängerprofil, insbesondere ein Keilprofil auf, wobei die Vorsprünge an den den Einspannteilen abgewandten Enden der Hebel ballig/abgerundet sind. Hierdurch wird in besonders einfacher Art und Weise sicher gestellt, dass das durch die Fliehkräfte radial nach außen wandernde Fliehgewicht die beiden Hebelenden auseinander und damit die an den gegenüberliegenden Enden liegenden Einspannkörper aufeinander zu bewegt.

In einer weiteren bevorzugten Ausgestaltungsform kann jeder Einspannkörper als ein einstückig am Einspannteil ausgebildeter, in Richtung der Einspannoberfläche des Werkstücks vorstehender Vorsprung ausgebildet sein, die sich bei einer weiteren unter Kraft erfolgenden Zustellbewegung des Backenkörpers in Richtung der Einspannoberfläche unter Eigenverformung reversibel zueinander und bezüglich der Einspannteillängsmittelachse bewegen. Dies stellt eine konstruktiv besonders einfache und stabile Ausgestaltungsmöglichkeit dar, bei der unter Verzicht auf eine aufwendige Lagerung der Einspannkörper mittels Hebeln dennoch die gleichen Vorteile erzielbar sind. Hat hierbei jeder Einspannkörper eine kreisbogensegment- bzw. zylindermantelförmige Außenkontur, wobei die in Anlage mit dem Abschnitt der Einspannoberfläche bringbare Kontaktlinie auf dieser Außenkontur liegt, erfolgt eine besonders Oberflächen schonende Einspannung.

Weitere Einzelheiten, Aspekte und Vorteile der vorliegenden Erfindung ergeben sich besser aus der nachfolgenden Beschreibung anhand der Zeichnung.

Es zeigt:
Fig. 1 eine vereinfachte Draufsicht auf eine erfindungsgemäße Spannbacke;
Fig.2 eine perspektivische Ansicht auf die Spannbacke von Fig. 1;
Fig. 3 und 4 gegenüber Fig. 1 vergrößerte Darstellungen der Spannbacke im Zuge einer Zustellbewegung an Werkstücke mit unterschiedlichen Durchmessern;
Fig. 5 eine Ansicht einer Spannbacke in Anlage an einem Werkstück an der Untergrenze eines Werkstückdurchmesserbereichs;
Fig. 6 eine Ansicht einer Spannbacke in Anlage an einem Werkstück an der Obergrenze eines Werkstückdurchmesserbereichs;
Fig. 7 eine Ansicht dreier Spannbacken, welche an einem Dreibackenfutter ein Werkstück an der Untergrenze des Werkstückdurchmesserbereichs einspannen;
Fig. 8 eine Ansicht dreier Spannbacken, welche an einem Dreibackenfutter ein Werkstück an der Obergrenze des Werkstückdurchmesserbereichs einspannen;
Fig. 9 eine schematisch vereinfachte Ansicht einer Spannbacke mit einem anderen Anlenk- und Lagerungsprinzip der Einspannkörper;
Fig. 10 eine schematisch vereinfacht zwei Spannbacken mit anderen Ausbildungen der Einspannkörper in einer zusammengefassten Ansicht an ein und demselben Werkstück;
Fig. 11 eine Ansicht von vorne auf eine nicht zum Gegenstand der beanspruchten Erfindung gehörende Abwandlung mit einem eingespannten Werkstück an der Obergrenze des Werkstückdurchmesserbereichs;
Fig. 12. eine Schrägansicht von Fig. 11;
Fig. 13 eine Ansicht von vorne auf die weitere, nicht zum Gegenstand der beanspruchten Erfindung gehörende Abwandlung von Fig. 11 mit einem eingespannten Werkstück an der Untergrenze des Werkstückdurchmesserbereichs; und
Fig. 14 eine Schrägansicht von Fig. 13.

Es sei vorab festgehalten, dass der Gegenstand der vorliegenden Erfindung anhand einer Spannbacke beschrieben wird, welche zum Einspannen von Werkstücken mit zumindest teilweise sphärischer Umfangsoberfläche an Werkzeugmaschinen, insbesondere Drehbänken vorgesehen ist. Der Gegenstand der vorliegenden Erfindung ist jedoch nicht auf dieses konkrete Ausführungsbeispiel beschränkt; die erfindungsgemäße Spannbacke kann - gegebenenfalls nach entsprechenden Umrüstmaßnahmen - auch zum Einspannen von Werkzeugen an Bearbeitungsmaschinen oder -stationen verwendet werden. Weiterhin sind auch andere Werkzeugmaschinen außer Drehbänken mit der erfindungsgemäßen Spannbacke ausrüstbar. Weiterhin ist die erfindungsgemäße Spannbacke bei rein manuell zu bedienenden, halbautomatischen oder vollautomatischen Werkzeugmaschinen verwendbar.

Die einzelnen Darstellungen der Zeichnung sind z.T. abstrahiert bzw. vereinfacht und stellen keine konkreten Konstruktionsangaben dar; weiterhin sind die einzelnen Figuren nicht maßstäblich zueinander.

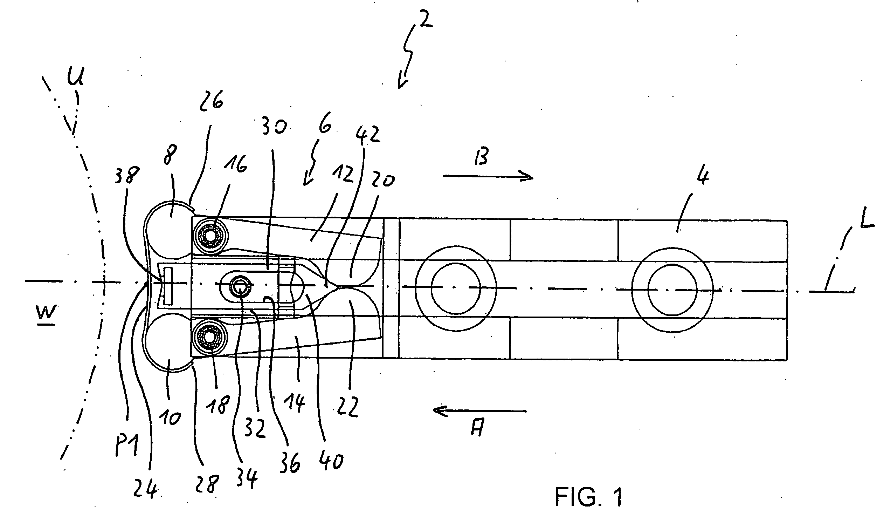

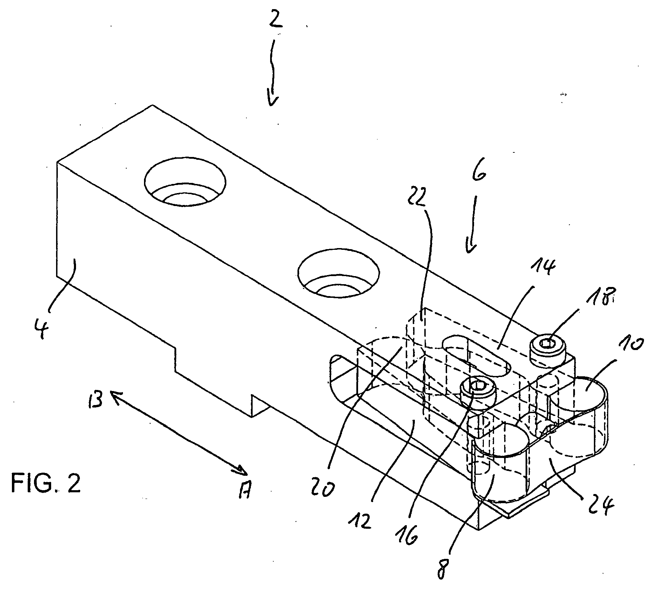

Eine in der Zeichnung insgesamt mit 2 bezeichnete Spannbacke umfasst gemäß der Darstellung von Fig. 2 einen Backenkörper 4, der von seiner Konzeption her so gestaltet ist, dass er mit entsprechenden Führungs- und Antriebsmitteln an einem in der Zeichnung nicht näher dargestellten Spannfutter einer Werkzeugmaschine, im dargestellten Ausführungsbeispiel am Spannfutter einer Drehbank anordenbar ist. Die Spannbacke 2 bzw. der Backenkörper 4 sind über zentral wirkende Verstellmittel für einen Einspannvorgang in Richtung auf ein Werkstück W zustellbar und für einen Ausspannvorgang von diesem wegfahrbar. In der Darstellung von Fig. 1 wäre demnach eine derartige Zustellbewegung eine Bewegung von rechts nach links (Pfeil A) und eine Wegfahrbewegung eines Bewegung von links nach rechts (Pfeil B).

Der Backenkörper 4 trägt an seinem in Fig. 1 linken Endabschnitt ein Einspannteil 6, das bei der Zustellbewegung (Pfeil A) des Backenkörpers 4 in Anlage mit einem Abschnitt einer Umfangsoberfläche U des Werkstücks W bringbar und bei der Wegfahrbewegung (Pfeil B) des Backenkörpers 4 von diesem abhebbar ist.

Das Einspannteil 6 wiederum trägt an seiner dem Werkstück W zugewandten Endseite zwei Einspannkörper 8 und 10, welche beidseitig einer Längsmittelachse L des Einspannteils 6 bzw. der gesamten Spannbacke 2 angeordnet sind. Diese Einspannkörper 8 und 10 sind jeweils entlang einer Kontaktlinie K in Anlage mit der Umfangsoberfläche U des Werkstücks W bringbar, wobei die Kontaktlinien K jeweils senkrecht zur Einspannteillängsmittelachse L verlaufen und somit gemäß den Figuren 1, 3 und 4 senkrecht zur dortigen Zeichenebene stehen.

Die Einspannkörper 8 und 10 sind, wie am besten aus Fig. 2 hervorgeht, jeweils über einen Großteil ihres Außenumfangs von einer Kreiszylindermantelfläche begrenzt (was in der Draufsicht der Figuren 1, 3 und 4 dem dort sichtbaren Kreisbogensegment entspricht), wobei sich die Kontaktlinie K jeweils auf dieser Mantelfläche verschieben kann, wie nachfolgend noch näher erläutert werden wird.

Die Einspannkörper 8 und 10 befinden sich jeweils an einem freien Ende eines Hebels 12 bzw. 14. Nachfolgend sei zunächst der in Fig. 1 obere Hebel 12 betrachtet; das zum Hebel 12 gesagte trifft gleichermaßen auf den Hebel 14 zu, der bezüglich des Hebels 12 symmetrisch zur Längsmittelachse L angeordnet ist.

Der Hebel 12 ist mittels eines Schwenklagers oder Zapfens 16 schwenkbeweglich in dem Einspannteil 6 gelagert. Der Zapfen 16 liegt hierbei derart, dass sich in dem Hebel 12 ein kurzer Hebelarm und ein langer Hebelarm ergeben, wobei am freien Ende des kurzen Hebelarms der Einspannkörper 8 angeordnet ist. Die Anordnung des Einspannkörpers 8 am Hebel 12 kann hierbei derart erfolgen, dass der Einspannkörper 8 einstückig aus dem Material des Hebels 12 ausgeformt ist. Ist es vorteilhaft oder unabdingbar, dass beispielsweise der Einspannkörper 8 aus einem weicheren Material als der Hebel 12 gefertigt ist, kann der Einspannkörper 8 über entsprechende Halte- und Befestigungsmittel auch an dem Hebel 12 festgelegt werden. Dies bietet unter Umständen auch die Möglichkeit, Einspannkörper 8 (und 10) unterschiedlicher Größe und/oder Form zu verwenden.

An dem dem Einspannkörper 8 abgewandten Ende des längeren Hebelarms ist an dem Hebel 12 ein Vorsprung 20 ausgebildet, der in Richtung der Längsmittelachse L vorspringt.

Das zu dem Hebel 12 bzw. den dortigen Positionen 8, 16 und 20 gesagte trifft gleichermaßen auf den Hebel 14 und die dortigen Position 10, 18 und 22 zu.

Die beiden Einspannkörper 8 und 10 sind durch ein Verbindungselement 24 miteinander gekoppelt. Das Verbindungselement 24 ist ausweislich Fig. 2 ein bandförmiges Bauteil, z.B. ein Streifen aus einem Federblechmaterial und erstreckt sich unter leichter konkaver Durchwölbung (Konkavität in Richtung des Einspannteils 6) sowohl zwischen den beiden Einspannkörpern 8 und 10 und ist auch darüber hinaus um Teilabschnitte des Kreiszylindermantels der Einspannkörper 8 und 10 bzw. in der Draufsicht etwa gemäß Fig. 1 um die kreisbogensegmentförmige Außenkontur der Einspannkörper 8 und 10 gelegt. Die Befestigung des Verbindungselements 24 an den Einspannkörpern 8 und 10 erfolgt hierbei entweder durch die materialinhärente Federkraft, mit der das Verbindungselement 24 die Außenkontur der Einspannkörper 8 und 10 umgreift oder die beiden freien Enden des Verbindungselements 24 sind an dem Außenumfang der Einspannkörper 8 und 10 befestigt, beispielsweise durch Linien- oder Punktverschweißungen 26 und 28.

In dem Einspannteil 6 und zwischen den beiden Hebeln 12 und 14 befindet sich weiterhin ein als Fliehgewicht ausgebildetes Anlageteil 30, welches in einer Führung 32 in Fig. 1 gleitbeweglich in Richtung der Längsmittelachse L nach links und rechts verschiebbar gelagert ist. Der maximale Bewegungsweg des Antageteils 30 innerhalb der Führung 32 wird durch einen Stift oder Anschlag 34 festgelegt, der sich innerhalb einer Langlochausnehmung 36 seitens der Führung 32 befindet. In dem in Fig. 1 dargestellten Zustand, in welchem der Stift 34 an der linken Kante der Ausnehmung 36 anschlägt, befindet sich das Anlageteil 30 in seiner in Fig. 1 maximal nach links verschobenen Stellung, in welcher ein linker Endabschnitt 38 des Anlageteils 30 von der dem Werkstück W zugewandten Stirnfläche des Einspannteils 6 vorsteht. Dieser vorstehende Endabschnitt 38 liegt somit zwischen den beiden Einspannkörpern 8 und 10 und hinterhalb des Verbindungselements 24.

An einem dem Endabschnitt 38 gegenüberliegenden Endabschnitt 40 weist das Anlageteil 30 ein Verdrängerprofil 42 auf, das in der Draufsicht von Fig. 1 annähernd keilförmig ist, also in Richtung des Backenkörpers 4 spitz zuläuft. Die Spitze oder Schneide des keilförmigen Verdrängerprofils 42 liegt hierbei in der Längsmittelachse L und am Eintritt des durch die beiden ballig/abgerundeten Oberflächen der Vorsprünge 20 und 22 gebildeten Spalts zwischen diesen beiden Vorsprüngen 20 und 22.

Die Oberflächen der Vorsprünge 20 und 22 müssen hierbei nicht die in den Figuren gezeigte ballig/abgerundete Form haben; je nach erwünschten Kräfteverhältnissen können auch flache Formen gewählt werden, um etwa zwei aufeinander abgleitende Keilflächen zwischen dem Anlageteil 30 (dessen Verdrängerprofil 42) und den Enden der Hebel 12 und 14 zu erhalten.

Im Betrieb der Werkzeugmaschine bewirken auf das Anlageteil (Fliehgewicht) 30 einwirkende Zentrifugalkräfte eine Verschiebung des Anlageteils 30 in der Führung 32 in Fig. 1 nach rechts (Pfeil B), wobei bei dieser Bewegung das Verdrängerprofil 42 in den Spalt zwischen den beiden Vorsprüngen 20 und 22 eindringt und diese beiden Vorsprünge 20 und 22 symmetrisch bezüglich der Längsmittelachse L auseinanderdrängt. Diese Bewegung der beiden Vorsprünge 20 und 22 bedingt aufgrund der Hebellagerung eine Bewegung der beiden Einspannkörper 8 und 10 symmetrisch bezüglich der Längsmittelachse L aufeinander zu.

Die Funktions- und Wirkungsweise der erfindungsgemäßen Spannbacke 2, sowie die sich hieraus ergebenden Vorteile werden nachfolgend näher erläutert.

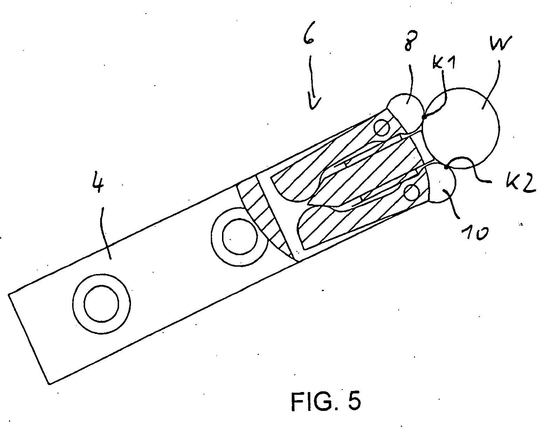

Es sei vorab festzuhalten, dass die Darstellung in den Figuren 1, 3 und 4 insofern nicht praxisgerecht ist, als dort die Stirnfläche des Anlageteils 30 beabstandet von der ihr zugewandten Oberfläche (Rückseite) des Verbindungselements 24 dargestellt ist. Tatsächlich stellt die Stirnfläche des Anlageteils 30 einen weiteren Abstützungspunkt (bzw. mindestens eine Kontaktlinie) für die Werkstückoberfläche unter Zwischenschaltung des Verbindungselements (30) zur Verfügung, wie dies am besten aus den Figuren 5 bis 8 hervorgeht.

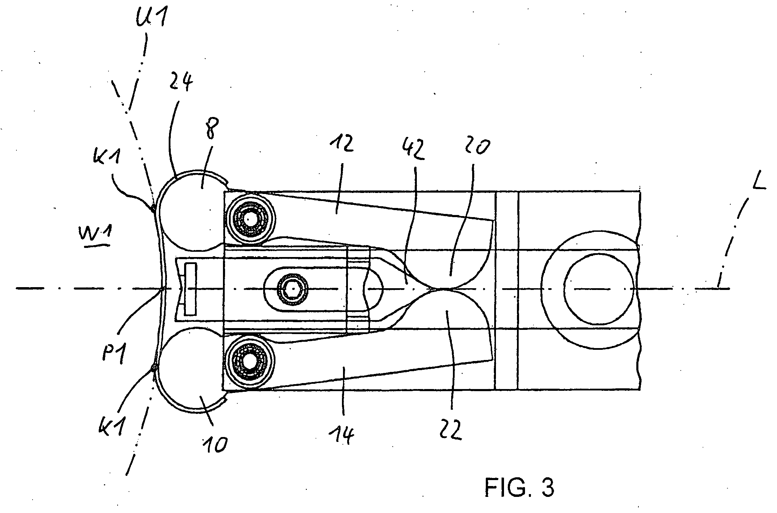

Betrachtet sei zunächst der Fall gemäß Fig. 3, wo ein Werkstück W1 mit vergleichsweise großem Durchmesser von einer Mehrzahl der erfindungsgemäßen Spannbacken 2 einzuspannen ist, wobei wiederum nur eine der Spannbacken 2 dargestellt ist. Im Zuge der Zustellbewegung des Backenkörpers 4 auf den Außenumfang U1 des Werkstücks W1 zu gelangt die Umfangsoberfläche U1 des Werkstücks W1 zunächst in Kontakt mit der dem Endabschnitt 38 des Fliehgewichts 30 gegenüber liegenden Oberfläche des Verbindungselements 24, wobei dieser Kontakt entlang einer Linie P1 erfolgt, welche auf der Längsmittelachse L liegt bzw. diese schneidet, senkrecht zur Zeichenebene von Fig. 3 verläuft und parallel zu den Kontaktlinien K (K1) ist. Die Mantelflächen der Einspannkörper 8 und 10 haben hierbei die Umfangsoberfläche U1 des Werkstücks W1 noch nicht erreicht. Eine weitere Zustellbewegung des Backenkörpers 4 in Richtung des Pfeils A bewirkt eine Durchbiegung oder -federung des Verbindungselements 24 in Richtung des Endabschnitts 38, was mit einer Bewegung der beiden Einspannkörper 8 und 10 symmetrisch zur Längsmittelachse L aufeinander zu einhergeht, da sich die relative Länge des Verbindungselements 24 zwischen den beiden Einspannkörpern 8 und 10 verringert. Es wird schließlich ein Zustand erreicht, in welchem die Umfangsoberfläche U1 an drei Stellen von dem Spannbacken 2 bzw. dem Einspannteil 6 abgestützt wird, nämlich an den beiden Kontaktlinien K1 seitens der Einspannkörper 8 und 10 und der weiteren Kontaktlinie P1 seitens des Verbindungselements 24, die sich je nach den geometrischen Verhältnissen (insbesondere des Durchmessers des Werkstücks W bzw. W1) zu einer mehr oder weniger großen Kontaktfläche erweitert, in der das Verbindungselement 24 an einem Teilabschnitt der Umfangsoberfläche U anliegt.

Die durch die relative Verkürzung des Verbindungselements 24 hervorgerufene Bewegung der beiden Einspannkörper 8 und 10 aufeinander zu bewirkt aufgrund der Hebelanordnung, dass sich die beiden Vorsprünge 20 und 22 symmetrisch bezüglich der Längsmittelachse L voneinander weg bewegen, so dass der Spalt zwischen den beiden Vorsprüngen 20 und 22 um einen bestimmten Betrag verbreitert wird. Die außermittige Lagerung der Hebel 12 und 14 derart, dass die Schwenklager oder Zapfen 16 und 18 näher an den Einspannkörpern 8 und 10 liegen, bewirkt, dass eine vergleichsweise geringfügige aufeinander zu Bewegung der beiden Einspannkörper 8 und 10 eine nach dem Hebelprinzip vergrößerte Auseinanderbewegung der beiden Vorsprünge 20 und 22 bewirkt. Umgekehrt und auf die Kräfteverhältnisse bezogen bedeutet diese außermittige Lagerung der Hebel 12 und 14, dass von dem Verdrängerprofil 42 über die Vorsprünge 20 und 22 aufgebrachte Kräfte in einem nach dem Hebelprinzip verstärkten Maße auf die Einspannkörper 8 und 10 wirken, die somit sicher gegen die Umfangsoberfläche U drücken.

Dieser Vorgang findet simultan bei am Spannfutter verwendeten Spannbacken 2 statt, so dass das Werkstück W1 umfangsseitig durch eine entsprechende Anzahl von Spannbacken 2 eingespannt wird. Wird anschließend das Spannfutter in rasche Rotation versetzt, werden die Fliehgewichte 30 radial nach außen bewegt, so dass sich das Verdrängerprofil 42 in den frei gewordenen Spalt zwischen den beiden Vorsprüngen 20 und 22 schieben kann. Je höher die Drehzahl des Spannfutters ist, umso stärker wirken radial gerichtete Zentrifugalkräfte auf die einzelnen Fliehgewichte 30 und umso kräftiger wird das Verdrängerprofil 42 zwischen die beiden Vorsprünge 20 und 22 gedrückt. Da der Backenkörper 4 des Spannfutters 2 an dem Spannfutter in Radialrichtung festgelegt ist, also keine entsprechenden Ausweichbewegungen durchführen kann, wird durch dieses Auseinanderdrängen der beiden Vorsprünge 20 und 22 eine entsprechende aufeinander zu Bewegung der beiden Einspannkörper 8 und 10 bewirkt, wobei die weiter oben geschilderten Hebelmechanismen bzw. die Kraftverstärkung zum Tragen kommt. Dies bedeutet, dass, je höher de Drehzahl der mit der erfindungsgemäßen Spannbacke ausgestatteten Werkzeugmaschine (zum Beispiel Drehbank) ist, umso stärker und sicherer das Werkstück W1 von den Einspannkörpern 8 und 10 radial gehalten wird.

Es wird sich letztendlich eine Art Gleichgewichtszustand zwischen der Radialbewegung des Anlageteils 30 und der Zustellbewegungen der Einspannkörper 8 und 10 derart einstellen, dass die Werkstückoberfläche an wenigstens drei Kontaktlinien, nämlich K1 und K2 seitens der Einspannkörper und mindestens P1 seitens des Anlageteils 30 bzw. des Verbindungselements 24 eingespannt ist, wobei die letztere Kontaktline (P1) gegebenenfalls auch zu einer Kontaktfläche erweitert sein kann.

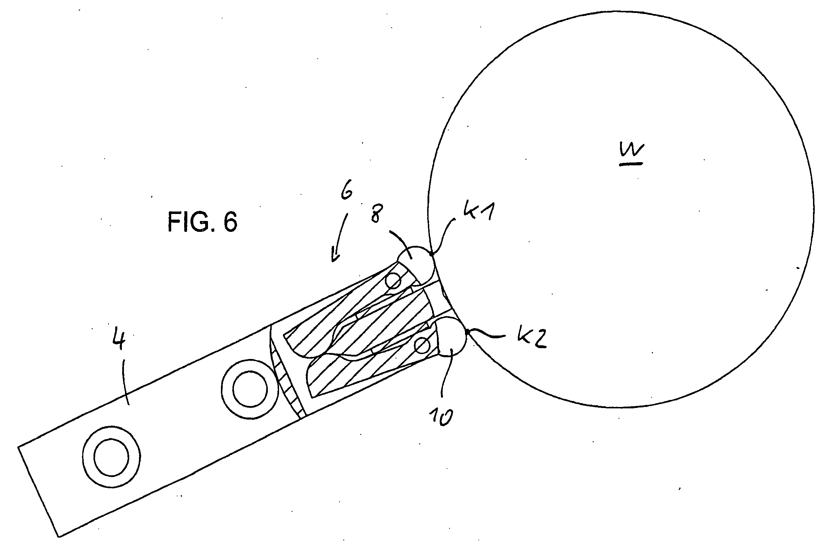

Ein derartiger Gleichgewichtszustand ist in den Figuren 5 und 6 für jeweils stark unterschiedliche Durchmesser des Werkstücks W1 bzw. W2 dargestellt.

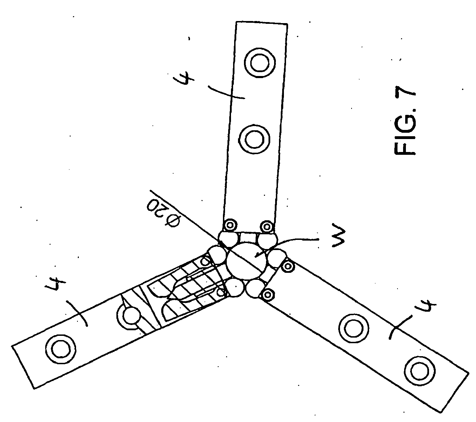

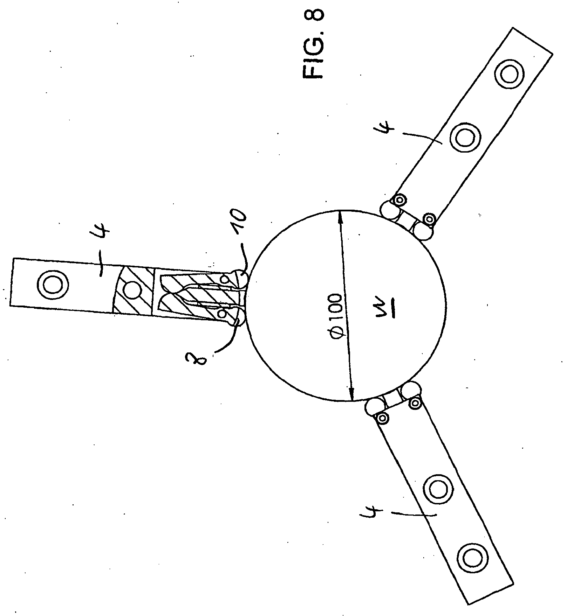

Die Figuren 7 und 8 zeigen jeweils ein mittels drei baugleichen Spannbacken 2 eingespanntes Werkstück ("Dreibackenfutter"), wobei Fig. 7 eine Ansicht ist, welche ein Werkstück an der Untergrenze des Werkstückdurchmesserbereichs zeigt und Fig. 8 eine Ansicht ist, welche ein Werkstück an der Obergrenze des Werkstückdurchmesserbereichs zeigt.

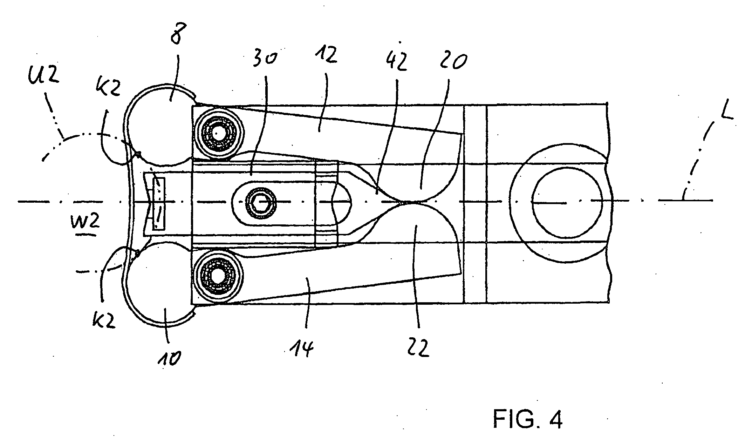

Fig. 4 zeigt den Fall, bei dem ein Werkstück W2 einzuspannen ist, welches gegenüber dem Werkstück W1 von Fig. 3 wesentlich kleineren Durchmesser hat. Auch hier gelangt der Außenumfang U2 des Werkstücks W2 zunächst in Anlage mit der Außenfläche des Verbindungselements 24 und verformt dieses im Zuge einer weiteren Zustellbewegung (Pfeil A) in Fig. 4 nach rechts auf den Endabschnitt 38 zu. Es erfolgt eine Mitnahmebewegung der beiden Einspannkörper 8 und 10 und damit wieder eine von der Zustellbewegung des Spannbackens 2 unabhängige Zustellbewegung der Einspannkörper 8 und 10 in Richtung der Umfangsoberfläche U2 (wie im Fall von Fig. 3), bis eine Anlage entlang der Kontaktlinien K2 erfolgt. Aufgrund der stärkeren Auslenkung oder Durchbiegung des Verbindungselements 24 wird im Fall des Beispiels von Fig. 4 der Spalt zwischen den beiden Vorsprüngen 20 und 22 entsprechend größer ausfallen, das heißt, das Verdrängerprofil 42 am Fliehgewicht 30 kann in Fig. 4 einen weiteren Weg nach rechts zurücklegen.

Es sei nochmals festzuhalten, dass in der zeichnerischen Darstellung der Figuren 3 und 4 lediglich die Ausgangslagen der Einspannkörper 8 und 10 sowie des dazwischen verlaufenden Verbindungselements 24 dargestellt sind. Die eingezeichneten Lagen der Kontaktlinien K1 bzw. K2 sind insofern in den Figuren 3 bzw. 4 nicht zutreffend, als die durch die relative Verkürzung des Verbindungselements 24 hervorgerufene aufeinander zu Bewegung der beiden Einspannkörper 8 und 10 in der zeichnerischen Darstellung nicht berücksichtigt ist. In der Praxis bedeutet dies beispielsweise, dass das Werkstück W2 gemäß Fig. 4 mit seinem Außenumfang U2 nicht die strichpunktiert dargestellte Eindringtiefe zwischen den beiden Einspannkörpern 8 und 10 erreichen wird, da bereits vorher aufgrund der aufeinander zu Bewegung der beiden Einspannkörper 8 und 10 symmetrisch zur Längsmittelachse L eine Anlage entlang der Kontaktlinien K2 erfolgen wird.

Gleiches trifft für das Werkstück W1 gemäß Fig. 3 zu.

Die Darstellungen der Figuren 3 und 4 dienen letztendlich zur Erläuterung des Sachverhalts, dass mit der erfindungsgemäßen Spannbacke 2 Werkstücke mit stark unterschiedlichen Durchmessern sicher radial abgestützt, das heißt eingespannt werden können, wobei in jedem Fall eine Sicherung des Einspannzustands durch das Anlageteil (Fliehgewicht) 30 gegeben ist, das sich im Bedarfsfall entsprechend weit mit seinem Verdrängerprofil 42 zwischen die beiden Vorsprünge 20 und 22 schiebt.

Dadurch, dass zwischen den beiden Einspannkörpern 8 und 10 das Verbindungselement 24 verläuft, welches sich zumindest abschnittsweise an die Umfangsoberfläche U des Werkstücks W anpasst und damit anlegt, erfolgt nicht nur eine linienförmige Anlage zwischen den jeweiligen Einspannkörpern 8 und 10 und dem Werkstück W, sondern eine flächige Anlage, wobei diese flächige Anlage selbsteinstellend im Sinne einer Anpassung an den jeweiligen Durchmesser bzw. Krümmungsradius des Werkstücks W ist. Dies stellt eine besonders schonende Einspannung insbesondere von verformungsempfindlichen Werkstücken sicher.

Aufgrund der Einsetzbarkeit über einen großen Durchmesserbereich der jeweiligen Werkstücke hinweg ist eine mit der erfindungsgemäßen Spannbacke ausgestattete Werkzeugmaschine in der Lage, ohne zeitaufwändig Umrüstarbeiten ein großes Spektrum von Einsatzanforderungen abzudecken. Insbesondere können Werkstücke unterschiedlicher Durchmesser mit hoher Präzision rundlaufgenau eingespannt werden, ohne dass die Spannbacken vorab aufwendig ausgedreht werden müssen. Eine exakte Fein- oder Endbearbeitung bereits vorgefertigter Werkstücke, bei denen ein exakter Rundlauf gegeben sein muss, ist damit ohne die Eingangs geschilderten Maßnahmen (Ausdrehen, Umrüsten, Bevorraten, etc.) möglich.

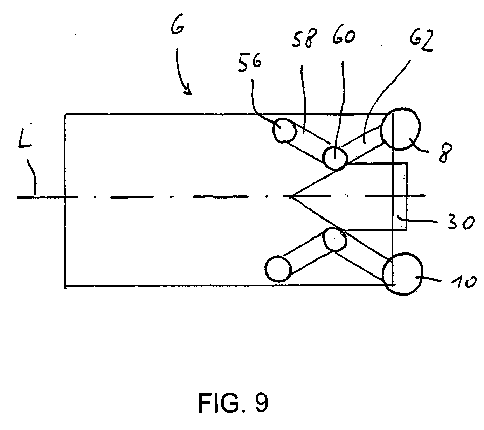

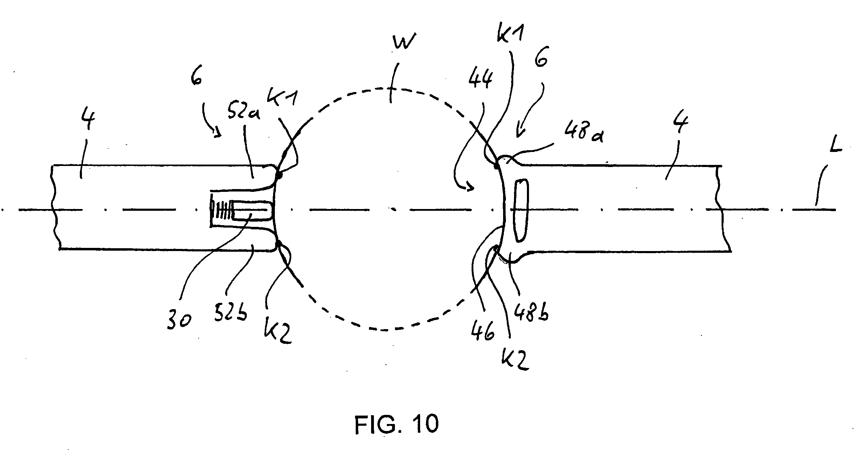

Die Figuren 9 und 10 zeigen weitere Ausgestaltungsmöglichkeiten der Erfindung, wobei in Fig. 10 zwei Ausgestaltungsmöglichkeiten von Spannbacken bzw. Backenkörpern 4 an einem gemeinsamen Werkstück W dargestellt sind.

Bei dem in Fig. 10 rechts dargestellten Ausführungsbeispiel des Backenkörpers 4 ist das Einspannteils 6 einstückig ausgebildet und umfasst im Wesentlichen einen Anlagekopf 44, der eine Anlagefläche 46 zur Anlage an den Außenumfang des Werkstücks W definiert. Der Anlagekopf 44 kann hierbei die in Fig. 10 dargestellten, beidseitig der Einspannteillängsmittelachse L liegenden Auswölbungen 48a und 48b aufweisen. Im Material des Einspannteils 6 und im bezüglich der Werkstückmitte radial hinterhalb der Anlagefläche 46 befindet sich eine bevorzugt umfangsseitig geschlossene Ausnehmung 50, welche in der Draufsicht von Fig. 10 etwa die dort dargestellte langlochförmige Gestalt haben kann. Anstelle der einzelnen Ausnehmung 50 gemäß Fig. 10 können auch mehrere derartiger Ausnehmungen im Material des Einspannteils 6 ausgebildet sein, welche dann bevorzugt symmetrisch bezüglich der Längsmittelachse L angeordnet bzw. ausgebildet sind.

Durch die Ausnehmung 50 findet im Bereich des Einspannteils 6 nahe der Anlagefläche 46 eine gezielte Materialschwächung in dem Einspannteil 6 statt, so dass bei einem Einspannvorgang durch den Backenkörper 4, bei dem die Anlagefläche 46 gegen den Außenumfang des Werkstücks W gedrückt wird, sich die Anlagefläche 46 zwischen den beidseits liegenden Auswölbungen 48a und 48b nach innen, das heißt in Fig. 10 nach rechts deformieren kann, wobei diese Deformation elastisch ist.

Die Anlagefläche 46 stellt somit bei der Ausgestaltungsform gemäß Fig. 10, rechter Teil hiervon, ein Äquivalent zu dem Anlageteil 30 bzw. dem Verbindungselement 24 der Ausführungsform gemäß der Figuren 1 bis 4 dar, wobei auf dieser Anlagefläche 46 dann die wenigstens eine Kontaktlinie liegt, welche zusätzlich zu den beidseitigen Kontaktlinien K1 und K2 im Bereich der Auswölbungen 48a und 48b liegt und senkrecht zur Längsmittelachse L steht.

In der Ausgestaltungsform von Fig. 10, linker Teil hiervon, weist das Einspannteil 6 zwei beidseits der Längsmittelachse L liegende, vom Backenkörper 4 vorspringende Ausleger oder Vorsprünge 52a und 52b auf, welche an ihren freien Enden kreisbogensegment- bzw. zylindermantelförmig ausgebildet sind, wobei diese freien Enden in Anlage mit der Einspannoberfläche (dem Außenumfang) des Werkstücks bringbar sind. Die Kontaktlinien L1 und L2 liegen somit im Bereich der freien Enden der Vorsprünge 52a und 52b. In dem Raum zwischen den Vorsprüngen 52a und 52b ist das Anlageteil 30 angeordnet, welches unter Federkraft gegen den Außenumfang des Werkstücks W drückt und eine weitere Kontaktlinie mit der Umfangsfläche des Werkstücks W definiert, wobei diese weitere Kontaktlinie auf der Längsmittelachse L liegt und im Wesentlichen senkrecht zu dieser steht (also aus der Zeichenebene von Fig. 10 heraus). Bei einem Einspannvorgang verformen sich die Vorsprünge 52a und 52b elastisch und das Anlegeteil 30 federt um einen entsprechenden Betrag zurück, das heißt in Fig. 10 nach links.

Fig. 9 zeigt eine Abwandlung der Ausführungsform der Figuren 1 bis 4, bei der die beiden Hebel 12 und 14 der ersten Ausführungsform durch Kniehebelgelenke 54a bzw. 54b ersetzt sind. Betrachtet sei das Kniehebelgelenk 54a, zu welchem das Kniehebelgelenk 54b identisch ist. An einem einspannteilfesten Drehlager 56 ist ein Arm 58 gelagert, der an seinem anderen Ende mit einem Gelenk 60 in Verbindung steht. Vom Gelenk 60 aus verläuft ein weiterer Arm 62 zu dem Einspannkörper 8. Das Gelenk 60 liegt an einer Keilfläche des Anlageteils 30. Der Einspannkörper 8 bzw. der Arm 62 ist oder sind mit entsprechenden Führungsmitteln versehen, welche die gewünschte Bewegungsbahn des Einspannkörpers 8 (und analog des Einspannkörpers 10) ermöglichen. Eine Verschiebung des Anlageteils 30 in Fig. 9 nach rechts oder links bewirkt aufgrund der Anlage des Gelenks 60 an der Keilfläche des Anlageteils 30 und dem Kniehebel-Wirkprinzip entsprechende Verstellbewegungen der Einspannkörper 8 und 10, wobei aufgrund des Kniehebelprinzips konstruktiv in einem weiteren Bereich wählbare oder vorgebbare Unter- und Übersetzungsverhältnisse für Weg und/oder Kraft vorliegen.

Die Figuren 5 bis 8 zeigen Ansichten einer bzw. mehrerer Spannbacken jeweils identischer Bauweise und -größe in Anlage an Werkstücken mit unterschiedlichen Durchmessern, wobei Fig. 5 eine Ansicht einer Spannbacke in Anlage an einem Werkstück an der Untergrenze eines Werkstückdurchmesserbereichs, Fig. 6 eine Ansicht einer Spannbacke in Anlage an einem Werkstück an der Obergrenze eines Werkstückdurchmesserbereichs, Fig. 7 eine Ansicht dreier Spannbacken, welche an einem Dreibackenfutter ein Werkstück an der Untergrenze des Werkstückdurchmesserbereichs einspannen und Fig. 8 eine Ansicht dreier Spannbacken zeigt, welche an einem Dreibackenfutter ein Werkstück an der Obergrenze des Werkstückdurchmesserbereichs einspannen. Die obigen Ausführungen treffen bei diesen Figuren gleichermaßen zu. Auch sind alle oder einige der in den Figuren 5 bis 8 gezeigten Spannbacken durch solche gemäß den Figuren 9 und/oder 10 ersetzbar.

Da die erfindungsgemäße Spannbacke 2 aufgrund des voll kompatiblen Backenkörpers 4 problemlos gegen herkömmliche Spannbacken austauschbar ist, ist eine Nachrüstung bereits vorhandener Werkzeugmaschinen problemlos möglich.

Im Betrieb vorkommende Sonderanforderungen, beispielsweise außerzentrisch eingestellte Spannbacken an einem Mehrbackenfutter oder dergleichen sind mit der erfindungsgemäßen Spannbacke 2 bzw. einem hiermit ausgestatteten Backenfutter oder Spannfutter gleichermaßen möglich.

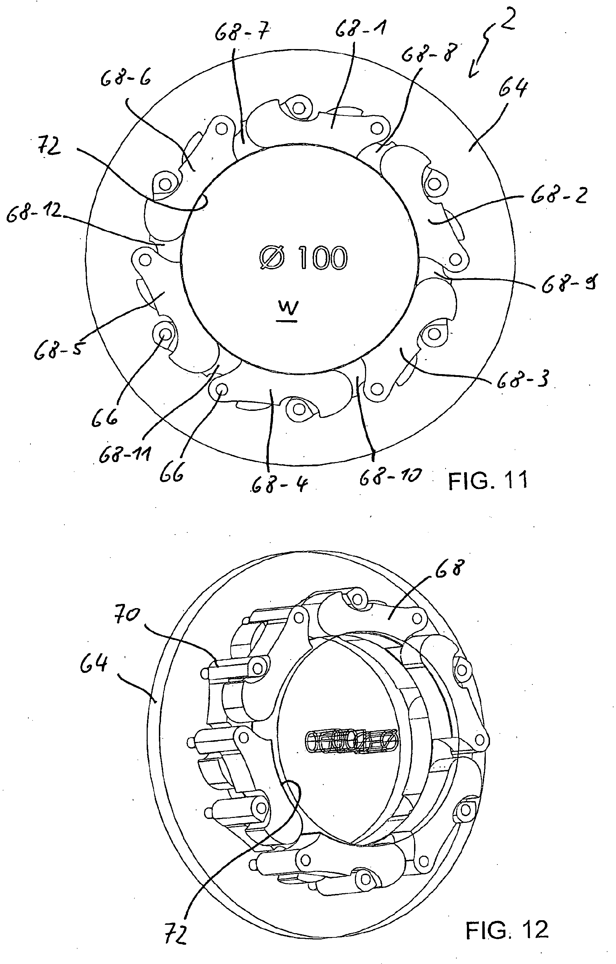

Die Figuren 11 bis 14 zeigen eine Ausgestaltungsform, welche nicht unmittelbar zum Gegenstand der beanspruchten Erfindung gehört, jedoch zeigen soll, wie die vorliegende Erfindung abgewandelt werden kann.

Die Spannbacke 2 gemäß den Figuren 11 bis 14 umfasst im Wesentlichen eine plane Scheibe 64, welche gegebenenfalls auch Teil des (Drehbank)futters sein kann. Im dargestellten Beispiel konzentrisch zu einer Rotationsachse der Scheibe 64 ist auf dieser eine Mehrzahl von Stiften 66 angeordnet, welche somit auf einem gemeinsamen Kreis liegen, dessen Mittelpunkt bevorzugt, aber nicht zwingend in der Drehachse der Scheibe 64 liegt. Die Stifte 66 sind hierbei gleichmäßig voneinander beabstandet und regelmäßig entlang des imaginären Kreises verteilt.

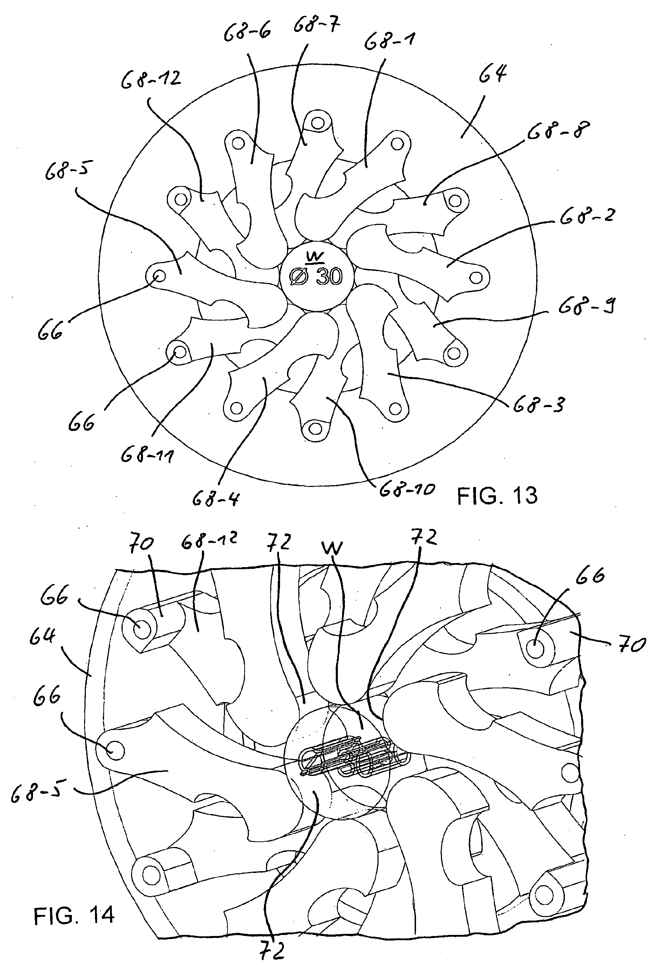

Jeder Stift 66 trägt einen Einspannkörper 68, wobei ausweislich der Figuren 12 und 14 die Anordnung der Einspannkörper 68 höhenmäßig versetzt ist, d.h. im dargestellten Beispiel liegen sechs Einspannkörper 68-1 bis 68-6 in einer Ebene und sechs weitere Einspannkörper 68-7 bis 68-12 liegen in einer weiteren Ebene, welche näher an der Außenfläche der Scheibe 64 ist. Erreicht wird dies durch unterschiedliche Ausgestaltungen von Lagern 70, mit denen die Einspannkörper 68 auf den Stiften 66 gelagert sind. Die beiden Ebenen sind zueinander und zur Außenfläche der Scheibe 64 parallel.

Durch die Schwenkbarkeit der Einspannkörper 68 um die Stifte 66 können diese in Richtung der Rotationsachse zugestellt und hiervon weg bewegt werden, so dass Anlageflächen 72 (glatt, geriffelt, beschichtet etc.) an den den Lagern 70 abgewandten Endabschnitten der Einspannkörper 68 am Außenumfang des Werkstücks W anliegen können. Hierbei kann unter Umständen wenigstens eine der Bewegungen der Einspannkörper, also entweder diejenige auf die Werkstückoberfläche zu oder diejenige hiervon weg durch Federn oder dergl. unterstützt werden.

Es liegt ein bevorzugt allen Einspannkörpern 68 gemeinsamer Antrieb vor (nicht dargestellt), z.B. ein Spannring, bei dessen Verdrehung die entsprechenden Bewegungen der Einspannkörper erzwungen und erreichte Endlagen aufrecht erhalten werden.

Wie sich am besten aus einem Vergleich der Figuren 11 und 13 ergibt, ist bevorzugt die Ausgestaltung einer Längsseite eines jeden Einspannkörpers, nämlich derjenigen, die an der Werkstückumfangsfläche anliegen kann, derart, dass, je größer der Werkstückdurchmesser ist, um so größer der Flächenanteil wird, mit dem sich jeder Einspannkörper 68 an diese Umfangsoberfläche anlegt.

Der speziell in Fig. 13 erkennbare, vom exakt radial/strahlenförmigen Verlauf abweichende schräge Verlauf der Einspannkörper 68 erzeugt bei einer Relativdrehung des Werkstücks W zu der Scheibe 64, welche einer Drehung des Werkstücks W in Richtung des Pfeils D in Fig. 13 (bei still stehender Scheibe 64) entsprechen würde, eine zusätzliche Selbsthemmung oder -klemmung des Werkstücks an den Anlageflächen 72, da sich ein Verspreizungseffekt ergibt.

Auch diese Abwandlung ist in der Lage, Werkstücke in einem großen Durchmesserbereich sicher, schnell und schonend zu spannen.

Beschrieben wurde insoweit zusammenfassend eine Spannbacke zum Einspannen von Werkstücken, insbesondere Werkstücken mit zumindest teilweise sphärischer Umfangsoberfläche, an Werkzeugmaschinen, insbesondere Drehbänken, mit: einem Backenkörper, welcher direkt oder indirekt an einem Spannfutter der Werkzeugmaschine anordenbar ist und für einen Einspannvorgang in Richtung auf das Werkstück zustellbar und für einen Ausspannvorgang von diesem wegfahrbar ist; und einem am Backenkörper angeordneten Einspannteil, welches bei der Zustellbewegung des Backenkörpers in Anlage mit einem Abschnitt der Umfangsoberfläche des Werkstücks bringbar und bei der Wegfahrbewegung des Backenkörpers von diesem abhebbar ist, wobei das Einspännteil an seiner dem Werkstück zugewandten Endseite zwei beidseitig einer Längsmittelachse des Einspannteils liegende Einspannkörper aufweist, welche jeweils entlang einer senkrecht zur Einspannteillängsmittelachse verlaufenden Kontaktlinie in Anlage mit dem Abschnitt der Umfangsoberfläche des Werkstücks bringbar sind, wobei die beiden Kontaktlinien im wesentlichen parallel zueinander verlaufen. Jeder der Einspannkörper ist an einem freien Ende eines am Einspannteil schwenkbeweglich gelagerten Hebels angeordnet, wobei die Hebel symmetrisch bezüglich der Einspannteillängsmittelachse am Einspannteil gelagert sind, wobei die Einspannkörper mittels eines flexiblen, an den Außenumfang des Werkstücks zumindest abschnittsweise anpassbaren Verbindungselements miteinander verbunden sind.

## Patentansprüche

1. Spannbacke zum Einspannen von Werkstücken (W, W1, W2), insbesondere Werkstücken mit zumindest teilweise sphärischer Einspannoberfläche (U, U1, U2), an Werkzeugmaschinen, insbesondere Drehbänken, mit:
einem Backenkörper (4), welcher direkt oder indirekt an einem Spannfutter der Werkzeugmaschine anordenbar ist und für einen Einspannvorgang in Richtung auf das Werkstück (W, W1, W2) zustellbar und für einen Ausspannvorgang von diesem wegfahrbar ist; und
einem am Backenkörper (4) angeordneten Einspannteil (6), welches bei der Zustellbewegung des Backenkörpers (4) in Anlage mit einem Abschnitt der Einspannoberfläche (U, U1, U2) des Werkstücks (W, W1, W2) bringbar und bei der Wegfahrbewegung des Backenkörpers (4) von diesem abhebbar ist, wobei
das Einspannteil (6) an seiner der Einspannoberfläche zugewandten Endseite zwei beidseitig einer Längsmittelachse (L) des Einspannteils liegende Einspannkörper (8, 10) aufweist, welche jeweils entlang einer senkrecht zur Einspannteillängsmittelachse (L) verlaufenden Kontaktlinie (K1, K2) in Anlage mit dem Abschnitt der Einspannoberfläche des Werkstücks bringbar sind, wobei die beiden Kontaktlinien im wesentlichen parallel zueinander verlaufen,
**dadurch gekennzeichnet, dass**
sich die Kontaktlinien (K1, K2) der Einspannkörper (8, 10) nach erfolgter Anlage an der Einspannoberfläche (U, U1, U₂) des Werkstücks (W, W1, W2) bei einer weiteren unter Kraft erfolgenden Zustellbewegung der Einspannkörper (8, 10) in Richtung der Einspannoberfläche (U, U1, U2) reversibel relativ zueinander und damit bezüglich der Einspannteillängsmittelachse (L) bewegen; und
dass im Bereich zwischen den beiden Einspannkörpern (8, 10) ein Anlageteil (30) vorhanden ist, welches mit einer mindestens eine weitere Kontaktlinie (P1) definierenden Anlagefläche in Richtung der Einspannoberfläche (U, U1, U2) weist.

2. Spannbacke nach Anspruch 1, **dadurch gekennzeichnet, dass** der Vorstehbetrag des Anlageteils (30) von einer Stirnfläche des Einspannteils (6) verschiebbar und/oder einstellbar ist.

3. Spannbacke nach Anspruch 1 oder 2, **dadurch gekennzeichnet, dass** jeder der Einspannkörper (8, 10) an einem freien Ende eines am Einspannteil (6) schwenkbeweglich gelagerten Hebels (12, 14) angeordnet ist, wobei die Hebel symmetrisch bezüglich der Einspannteillängsmittelachse (L) am Einspannteil (6) gelagert sind, wobei
die Einspannkörper (8, 10) mittels eines.flexiblen, an die Einspannoberfläche Werkstücks zumindest abschnittsweise anpassbaren Verbindungselements (24) miteinander verbunden sind.

4. Spannbacke nach Anspruch 3, **dadurch gekennzeichnet, dass** der Einspannkörper (8, 10) einstückig am dem einen freien Ende des zugehörigen Hebels (12, 14) ausgebildet ist.

5. Spannbacke nach einem der Ansprüche 1 bis 4, **dadurch gekennzeichnet, dass** der Einspannkörper (8, 10) eine kreisbogensegment- bzw. zylindermantelförmige Außenkontur hat, wobei die in Anlage mit dem Abschnitt der Einspannoberfläche (U, U1, U2) bringbare Kontaktlinie (K1, K2) auf dieser Außenkontur liegt.

6. Spannbacke nach einem der Ansprüche 1 bis 4, **dadurch gekennzeichnet, dass** der Einspannkörper (8, 10) eine der Einspannoberfläche zugewandte, plane Außenkontur hat, wobei die in Anlage mit dem Abschnitt der Einspannoberfläche (U, U1, U2) bringbare Kontaktlinie (K1, K2) auf dieser Außenkontur liegt.

7. Spannbacke nach einem der Ansprüche 3 bis 6, **dadurch gekennzeichnet, dass** das dem Einspannkörper (8, 10) abgewandte Ende des Hebels (12, 14) einen zur Einspannteillängsmittelachse (L) weisenden Vorsprung (20, 22) aufweist.

8. Spannbacke nach einem der Ansprüche 2 bis 7, **dadurch gekennzeichnet, dass** ein durch eine Schwenkachse festgelegter Schwenkpunkt (16, 18) des Hebels (12, 14) im Nahbereich des Einspannkörpers (8, 10) liegt.

9. Spannbacke nach einem der Ansprüche 3 bis 8, **dadurch gekennzeichnet, dass** das Verbindungselement (24) bandförmig ist und zumindest teilweise um die Außenkontur der Einspannkörper (8, 10) verläuft.

10. Spannbacke nach Anspruch 9, **dadurch gekennzeichnet, dass** das Verbindungselement (24) ein Federblechstreifen ist, der in seiner entspannten Lage ist, wenn sich die Vorsprünge (20, 22) an den den Einspannkörpern (8, 10) abgewandten Enden der Hebel (12, 14) berühren.

11. Spannbacke nach einem der Ansprüche 7 bis 10, **dadurch gekennzeichnet, dass** sich das Anlageteil (30) mit zunehmender Drehzahl des Spannfutters nach Art eines Fliehgewichts in Richtung des Backenkörpers (4) bewegt und sich im Zuge dieser Bewegung zwischen die den Einspannteilen (8, 10) abgewandten Enden der Hebel (12, 14) bzw. die dortigen Vorsprünge (20, 22) drängt und diese von der Einspannteillängsmittelachse (L) weg bewegt, so dass sich die Einspannkörper (8, 10) symmetrisch aufeinander bzw. auf die Einspannteillängsmittelachse (L) zu bewegen

12. Spannbacke nach Anspruch 11, **dadurch gekennzeichnet, dass** ein sich zwischen die Enden der Hebel (12, 14) bzw. die dortigen Vorsprünge (20, 22) drängender Abschnitt (40) des Anlageteils (30) ein Verdrängerprofil (42), insbesondere ein Keilprofil, hat und dass die Vorsprünge (20, 22) an den den Einspannteilen (8, 10) abgewandten Enden der Hebel (12, 14) ballig/abgerundet sind.

13. Spannbacke nach Anspruch 1, **dadurch gekennzeichnet, dass** die Einspannkörper (8, 10) als einstückig am Einspannteil (6) ausgebildete, in Richtung der Einspannoberfläche (U, U1, U2) des Werkstücks (W, W1, W2) vorstehende Vorsprünge (48a, 48b; 52a, 52b) ausgebildet sind, welche sich bei einer weiteren unter Kraft erfolgenden Zustellbewegung des Backenkörpers (4) und damit der Einspannkörper (8, 10) in Richtung der Einspannoberfläche (U, U1, U2) unter Eigenverformung reversibel zueinander und bezüglich der Einspannteillängsmittelachse (L) bewegen.

14. Spannbacke nach Anspruch 13, **dadurch gekennzeichnet, dass** jeder Einspannkörper (8, 10) eine kreisbogensegment- bzw. zylindermantelförmige Außenkontur hat, wobei die in Anlage mit dem Abschnitt der Einspannoberfläche (U, U1, U2) bringbare Kontaktlinie (K1, K2) auf dieser Außenkontur liegt.

15. Spannbacke nach Anspruch 13, **dadurch gekennzeichnet, dass** jeder Einspannkörper (8, 10) eine der Einspannoberfläche zugewandte, plane Außenkontur hat, wobei die in Anlage mit dem Abschnitt der Einspannoberfläche (U, U1, U2) bringbare Kontaktlinie (K1, K2) auf dieser Außenkontur liegt.

## Claims

1. Clamping jaw for clamping workpieces (W, W1, W2), in particular workpieces having an at least partially spherical clamping surface (U, U1, U2), to machine tools, in particular lathes, having:
a jaw member (4) which can be arranged directly or indirectly on a clamping chuck of the machine tool and which can be advanced for a clamping operation in the direction of the workpiece (W, W1, W2) and which can be moved away therefrom for an unclamping operation; and
a clamping member (6) which is arranged on the jaw member (4) and which during the advance movement of the jaw member (4) can be moved into abutment with a portion of the clamping surface (U, U1, U2) of the workpiece (W, W1, W2) and can be raised therefrom when the jaw member (4) is moved away therefrom, wherein
the clamping member (6) has at the end side thereof facing the clamping surface two clamping members (8, 10) which are located at each of the two sides of a longitudinal centre axis (L) of the clamping member and which can each be brought along a contact line (K1, K2) which extends perpendicularly relative to the clamping member longitudinal centre axis (L) into abutment with the portion of the clamping surface of the workpiece, wherein the two contact lines extend substantially parallel with each other,
**characterised in that**
the contact lines (K1, K2) of the clamping members (8, 10) after abutment has been carried out against the clamping surface (U, U1, U2) of the workpiece (W, W1, W2) during another advance movement of the clamping members (8, 10) which is carried out under the action of force in the direction of the clamping surface (U, U1, U2) move in a reversible manner relative to each other and consequently relative to the clamping member longitudinal centre axis (L); and
**in that**, in the region between the two clamping members (9, 10), there is provided an abutment portion (30) which is directed with an abutment face which defines at least one additional contact line (P1) in the direction of the clamping surface (U, U1, U2).

2. Clamping jaw according to claim 1, **characterised in that** the protruding value of the abutment portion (30) from an end face of the clamping member (6) can be displaced and/or adjusted.

3. Clamping jaw according to claim 1 or claim 2,
**characterised in that** each of the clamping members (8, 10) is arranged on a free end of a lever (12, 14) which is pivotably movably supported on the clamping member (6), wherein the levers are supported symmetrically with respect to the clamping member longitudinal centre axis (L) on the clamping member (6), wherein
the clamping members (8, 10) are connected to each other by means of a flexible connection element (24) which can be at least partially adapted to the clamping surface of the workpiece.

4. Clamping jaw according to claim 3, **characterised in that** the clamping member (8, 10) is constructed integrally on the one free end of the associated lever (12, 14).

5. Clamping jaw according to any one of claims 1 to 4,
**characterised in that** the clamping member (8, 10) has an outer contour in the form of a circular arc segment or a cylinder cover, wherein the contact line (K1, K2) which can be brought into abutment with the portion of the clamping surface (U, U1, U2) is located on this outer contour.

6. Clamping jaw according to any one of claims 1 to 4,
**characterised in that** the clamping member (8, 10) has a planar outer contour which faces the clamping surface, wherein the contact line (K1, K2) which can be brought into abutment with the portion of the clamping surface (U, U1, U2) is located on this outer contour.

7. Clamping jaw according to any one of claims 3 to 6,
**characterised in that** the end of the lever (12, 14) facing away from the clamping member (8, 10) has a projection (20, 22) which is directed towards the clamping member longitudinal centre axis (L).

8. Clamping jaw according to any one of claims 2 to 7,
**characterised in that** a centre of gravity (16, 18) of the lever (12, 14) determined by a pivot axis is located in the vicinity of the clamping member (8, 10).

9. Clamping jaw according to any one of claims 3 to 8,
**characterised in that** the connection element (24) is strip-like and extends at least partially around the outer contour of the clamping members (8, 10).

10. Clamping jaw according to claim 9, **characterised in that** the connection element (24) is a resilient metal strip which is in the relaxed position thereof when the projections (20, 22) touch each other at the ends of the levers (12, 14) facing away from the clamping members (8, 10).

11. Clamping jaw according to any one of claims 7 to 10,
**characterised in that** the abutment portion (30) moves as the speed of the clamping chuck increases in the manner of a centrifugal weight in the direction of the jaw member (4) and is urged during this movement between the ends of the levers (12, 14) facing away from the clamping members (8, 10) or the projections (20, 22) at that location and moves them away from the clamping member longitudinal centre axis (L) so that the clamping members (8, 10) move symmetrically towards each other or towards the clamping member longitudinal centre axis (L).

12. Clamping jaw according to claim 11, **characterised in that** a portion (40) of the abutment portion (30) which is urged between the ends of the levers (12, 14) or the projections (20, 22) at that location has a pressing profile (42), in particular a wedge profile, and **in that** the projections (20, 22) at the ends of the levers (12, 14) facing away from the clamping members (8, 10) are spherical/rounded.

13. Clamping jaw according to claim 1, **characterised in that** the clamping members (8, 10) are constructed as projections (48a, 48b; 52a, 52b) which are integrally constructed on the clamping member (6) and which protrude in the direction of the clamping surface (U, U1, U2) of the workpiece (W, W1, W2) and which during another advance movement of the jaw member (4) and consequently the clamping members (8, 10), which movement is carried out under the action of force, in the direction of the clamping surface (U, U1, U2) move with self-deformation in a reversible manner relative to each other and relative to the clamping member longitudinal centre axis (L).

14. Clamping jaw according to claim 13, **characterised in that** each clamping member (8, 10) has an outer contour which is in the form of a circular arc segment or a cylinder cover, wherein the contact line (K1, K2) which can be brought into abutment with the portion of the clamping surface (U, U1, U2) is located on this outer contour.

15. Clamping jaw according to claim 13, **characterised in that** each clamping member (8, 10) has a planar outer contour which faces the clamping surface, wherein the contact line (K1, K2) which can be brought into abutment with the portion of the clamping surface (U, U1, U2) is located on this outer contour.

## Revendications

1. Mâchoire de serrage pour le serrage de pièces à usiner (W, W1, W2), en particulier de pièces à usiner avec une surface de serrage au moins en partie sphérique (U, U1, U2) sur des machines-outils, en particuliers des tours avec :
un corps de mâchoire (4) qui peut être agencé directement ou indirectement sur un mandrin de serrage de la machine-outil et peut être avancé pour un processus de serrage en direction de la pièce à usiner (W, W1, W2) et éloigné de celle-ci pour un processus de desserrage ; et
une partie de serrage (6) agencée sur le corps de mâchoire (4), qui peut être amenée en appui lors du mouvement d'avance du corps de mâchoire (4) avec une section de la surface de serrage (U, U1, U2) de la pièce à usiner (W, W1, W2) et peut être levée de celle-ci lors du mouvement d'éloignement du corps de mâchoire (4), dans laquelle
la partie de serrage (6) présente sur son côté d'extrémité tourné vers la surface de serrage deux corps de serrage (8, 10) se trouvant de part et d'autre d'un axe médian longitudinal (L) de la partie de serrage qui peuvent être amenés en appui respectivement le long d'une ligne de contact (K1, K2) s'étendant perpendiculairement à l'axe médian longitudinal de la partie de serrage (L) avec la section de la surface de serrage de la pièce, dans laquelle les deux lignes de contact s'étendent sensiblement parallèlement l'une à l'autre,
**caractérisée en ce que**
les lignes de contact (K1, K2) des corps de serrage (8, 10) se déplacent de manière réversible l'une par rapport à l'autre et ainsi par rapport à l'axe médian longitudinal de la partie de serrage (L) après l'appui sur la surface de serrage (U, U1, U2) de la pièce à usiner (W, W1, W2) lors d'un autre mouvement d'avance s'effectuant sous la force des corps de serrage (8, 10) en direction de la surface de serrage (U, U1, U2) ; et
une partie d'appui (30) qui est tournée avec une surface d'appui définissant au moins une autre ligne de contact (P1) en direction de la surface de serrage (U, U1, U2), est présente dans la zone entre les deux corps de serrage (8, 10).

2. Mâchoire de serrage selon la revendication 1, **caractérisée en ce que** l'étendue de saillie de la partie d'appui (30) d'une surface avant de la partie de serrage (6) peut être déplacée et/ou réglée.

3. Mâchoire de serrage selon la revendication 1 ou 2, **caractérisée en ce que** chacun des corps de serrage (8, 10) est agencé sur une extrémité libre d'un levier (12, 14) logé de manière mobile en pivotement sur la partie de serrage (6), dans laquelle les leviers sont logés de manière symétrique par rapport à l'axe médian longitudinal de la partie de serrage (L) sur la partie de serrage (6), dans laquelle
les corps de serrage (8, 10) sont reliés entre eux à l'aide d'un élément de liaison (24) flexible adaptable au moins par section à la surface de serrage de la pièce à usiner.

4. Mâchoire de serrage selon la revendication 3, **caractérisée en ce que** le corps de serrage (8, 10) est réalisé d'un seul tenant sur l'une extrémité libre du levier afférent (12, 14).

5. Mâchoire de serrage selon l'une quelconque des revendications 1 à 4, **caractérisée en ce que** le corps de serrage (8, 10) a un contour extérieur en forme de segment d'arc de cercle ou d'enveloppe de cylindre, dans laquelle la ligne de contact (K1, K2) pouvant être amenée en appui avec la section de la surface de serrage (U, U1, U2) se trouve sur ce contour extérieur.

6. Mâchoire de serrage selon l'une quelconque des revendications 1 à 4, **caractérisée en ce que** le corps de serrage (8, 10) a un contour extérieur plan tourné vers la surface de serrage, dans laquelle la ligne de contact (K1, K2) pouvant être tournée en appui avec la section de la surface de serrage (U, U1, U2) se trouve sur ce contour extérieur.

7. Mâchoire de serrage selon l'une quelconque des revendications 3 à 6, **caractérisée en ce que** l'extrémité éloignée du corps de serrage (8, 10) du levier (12, 14) présente une saillie (20, 22) tournée vers l'axe médian longitudinal de la partie de serrage (L).

8. Mâchoire de serrage selon l'une quelconque des revendications 2 à 7, **caractérisée en ce qu'**un point de pivotement (16, 18) fixé par un axe de pivotement du levier (12, 14) se trouve dans la zone proche du corps de serrage (8, 10).

9. Mâchoire de serrage selon l'une quelconque des revendications 3 à 8, **caractérisée en ce que** l'élément de liaison (24) est en forme de bande et s'étend au moins en partie autour du contour extérieur des corps de serrage (8, 10).

10. Mâchoire de serrage selon la revendication 9, **caractérisée en ce que** l'élément de liaison (24) est une bande en tôle à ressorts qui est dans sa position desserrée lorsque les saillies (20, 22) se touchent sur les extrémités éloignées des corps de serrage (8, 10) des leviers (12, 14).

11. Mâchoire de serrage selon l'une quelconque des revendications 7 à 10, **caractérisée en ce que** la partie d'appui (30) se déplace avec une vitesse de rotation croissante du mandrin de serrage comme un poids centrifuge en direction du corps de mâchoire (4) et se pousse au cours de ce mouvement entre les extrémités éloignées des parties de serrage (8, 10) des leviers (12, 14) ou les saillies qui s'y trouvent (20, 22) et les déplace loin de l'axe médian longitudinal de la partie de serrage (L) de sorte que les corps de serrage (8, 10) se déplacent de manière symétrique l'un vers l'autre ou vers l'axe médian longitudinal de la partie de serrage (L).

12. Mâchoire de serrage selon la revendication 11, **caractérisée en ce qu'**une section (40) se poussant entre les extrémités des leviers (12, 14) ou les saillies qui s'y trouvent (20, 22) de la partie d'appui (30) a un profil pousseur (42), en particulier un profil à coin et **en ce que** les saillies (20, 22) sont bombées/arrondies sur les extrémités éloignées des parties de serrage (8, 10) des leviers (12, 14).

13. Mâchoire de serrage selon la revendication 1, **caractérisée en ce que** les corps de serrage (8, 10) sont réalisés comme des saillies (48a, 48b ; 52a, 52b) réalisées d'un seul tenant sur la partie de serrage (6), dépassant en direction de la surface de serrage (U, U1, U2) de la pièce à usiner (W, W1, W2) qui se déplacent lors d'un autre mouvement d'avance s'effectuant sous la force du corps de mâchoire (4) et ainsi des corps de serrage (8, 10) en direction de la surface de serrage (U, U1, U2) sous déformation propre de manière réversible les unes par rapport aux autres et par rapport à l'axe médian longitudinal de la partie de serrage (L).

14. Mâchoire de serrage selon la revendication 13, **caractérisée en ce que** chaque corps de serrage (8, 10) a un contour extérieur en forme de segment d'arc de cercle ou d'enveloppe de cylindre, dans laquelle la ligne de contact (K1, K2) pouvant être amenée en appui avec la section de la surface de serrage (U, U1, U2) se trouve sur ce contour extérieur.

15. Mâchoire de serrage selon la revendication 13, **caractérisée en ce que** chaque corps de serrage (8, 10) a un contour extérieur plan tourné vers la surface de serrage, dans laquelle la ligne de contact (K1, K2) pouvant être amenée en appui avec la section de la surface de serrage (U, U1, U2) se trouve sur ce contour extérieur.
